# EUROPEAN PATENT APPLICATION

(11) **EP 2 378 438 A1**
(43) Date of publication of application: **19.10.2011**
(21) Application number: 11154794.9
(22) Date of filing: 17.02.2011
(51) Int. Cl.: G06F 17/30

(54) **Video display apparatus and video display method**

(30) Priority: 19.04.2010 JP 2010095973
(71) Applicant: Kabushiki Kaisha Toshiba, Tokyo 105-8001 (JP)
(72) Inventor: Imada, Kei, Minato-ku Tokyo 105-8001 (JP)
(74) Representative: Henkel, Breuer & Partner

(57) **Abstract**

According to one embodiment, a video display apparatus includes a database, a selecting module, a person video scene detecting module, and a video displaying module. The database includes data of a name of a person and a feature amount on an image of the person. The selecting module is configured to select a name of a specific person. The person video scene detecting module is configured to detect a scene including the person of the selected name from a video content by using the database. The video displaying module is configured to display at least one image of moving picture or stationary picture indicating the detected scene in the video content in a list form.

## Description

### Field

Embodiments described herein relate generally to a video display apparatus and a video display method that extract a certain scene from a video content and display the extracted scene.

### Background

It is performed to record video contents such as broadcast programs received by a broadcast receiving apparatus, into a recording device such as a storage and watch them.

It is also performed to display the recorded contents in list form.

It is also performed to display thumbnails and associated information in organized form to provide the user with content information in an easy-to-understand manner when the video contents are displayed in list form.

However, the concrete method for extracting thumbnail images from the recorded contents are insufficient in terms of user convenience.

As described above, in the video display apparatus, it is performed to provide the user with content information in an easy-to-understand manner by displaying thumbnails and associated information in organized form when video contents are displayed.

However, for example, the disclosure is not sufficient regarding the concrete method of extracting thumbnail images from video contents, and in cases such as when the user wants to check a person appearing in a content, intuitive understanding is difficult to gain.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
FIG. 1 is an exemplary block diagram showing a structure of a video display apparatus according to an embodiment;
FIG. 2 is an exemplary view showing an element of a person and face database according to the embodiment;
FIG. 3 is an exemplary view showing person video scenes extracted from a video content in the video display apparatus according to the embodiment;
FIG. 4 is an exemplary view of a display of video scenes where a person associated with a person name appears in the video display apparatus according to the embodiment;
FIG. 5 is an exemplary view showing a method where the person to be extracted and the person name are registered while the person is displayed and the displayed person and the person name are stored in a state of being associated with each other in the video display apparatus according to the embodiment;
FIG. 6 is an exemplary view showing a method where when, for example, multiple persons are displayed as the persons to be extracted in the video display apparatus according to the embodiment, a highlighted person and a person name are registered and the highlighted person and the person name are stored in a state of being associated with each other;
FIG. 7 is an exemplary flowchart for explaining an operation including data registration into the person and face database in the video display apparatus according to the embodiment; and
FIG. 8 is an exemplary flowchart for explaining an operation performed to display a video scene where the person associated with the person name appears in the video display apparatus according to the embodiment.

### DETAILED DESCRIPTION

In general, according to one embodiment, a video display apparatus includes a database, a selecting module, a person video scene detecting module, and a video displaying module. The database includes data of a name of a person and a feature amount on an image of the person. The selecting module is configured to select a name of a specific person. The person video scene detecting module is configured to detect a scene including the person of the selected name from a video content by using the database. The video displaying module is configured to display at least one image of moving picture or stationary picture indicating the detected scene in the video content in a list form.

### (First Embodiment)

Hereinafter, exemplary embodiments will be described with reference to the drawings.

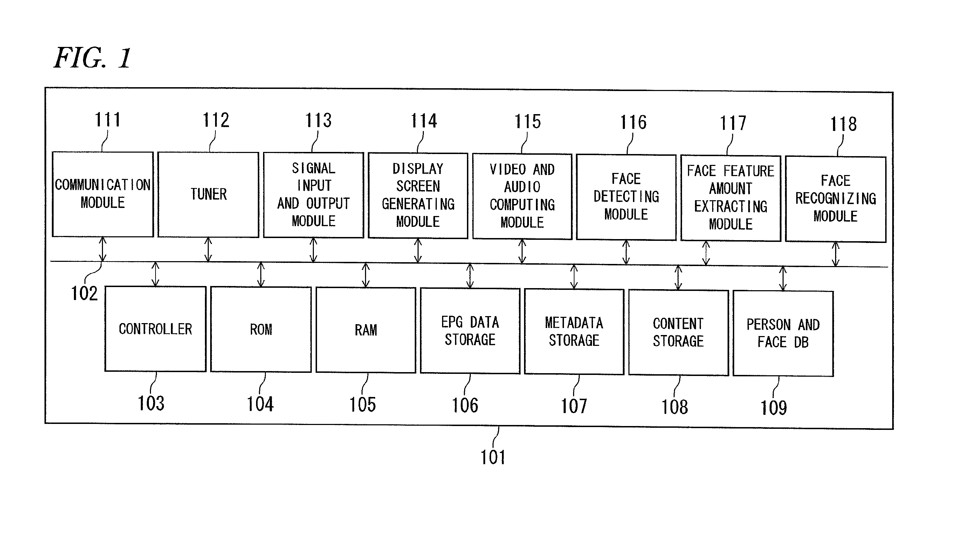

FIG. 1 is a block diagram showing the structure of a video display apparatus according to the embodiment.

Reference numeral 101 represents the video display apparatus. It stores video contents and displays them. Reference numeral 102 represents a control bus structured in the video display apparatus. Reference numeral 103 is a controller.

Reference numeral 104 represents a ROM. Reference numeral 105 represents a RAM.

Reference numeral 106 represents an EPG data storage. Reference numeral 107 represents a metadata storage. Reference numeral 108 represents a content storage. Reference numeral 109 represents a person and face database.

Reference numeral 111 represents a communication module. Reference numeral 112 represents a tuner. Reference numeral 113 represents a signal input and output module. Reference numeral 114 represents a display screen generating module. Reference numeral 115 represents a video and audio computing module.

Reference numeral 116 represents a face detecting module. Reference numeral 117 represents a face feature amount extracting module. Reference numeral 118 represents a face recognizing module.

The video display apparatus 101 is provided with the controller 103, and controls various components connected through the control bus 102.

Examples of the video display apparatus 101 include digital televisions having a recording function, Blue-ray/HD DVD/DVD/HDD/VHS recorders, and PCs having a recording function and an AV function.

In the ROM 104, a control program of the controller 103 is prestored. The RAM 105 is used as the work memory of the controller 103.

The communication module 111 is, for example, a network module such as a LAN. Necessary data and content data can be received from the Internet and the like.

The tuner 112 is a broadcast receiving module for receiving digital terrestrial broadcasts and BS/CS broadcasts. A broadcast program is selected and received, and the video signal, audio signal, EPG data and the like included in the broadcast program are obtained.

The signal input and output module 113 is an image sound input and output module such as HDMI, USB or DV.

The display screen generating module 114 is a module for generating display screens such as a content list screen including thumbnails of moving pictures and stationary pictures and a screen of a video signal converted into a moving picture.

The video and audio computing module 115 performs encoding and decoding of the video signals and image signals inputted and outputted through the communication module 111, the tuner 112 and the signal input and output module 113.

The metadata storage 10'7 is a recording module for storing the metadata related to the obtained video contents and EPG data. The metadata includes the genre and AV format of the broadcast program or the content and the data size of the content, and is stored in a state of being associated with the video content.

The content storage 108 stores the broadcast programs received by the tuner 112 and the contents received by the communication module 111 and the signal input and output module 113, and also stores the thumbnail data for displaying them in list form.

The EPG data storage 106 stores the EPG data received by the communication module 111 and the tuner 112. The EPG data includes data such as the name of the broadcasting station of each broadcast program, the title of the broadcast program, the start time of the program, the end time of the program, the cast and the genre of the program.

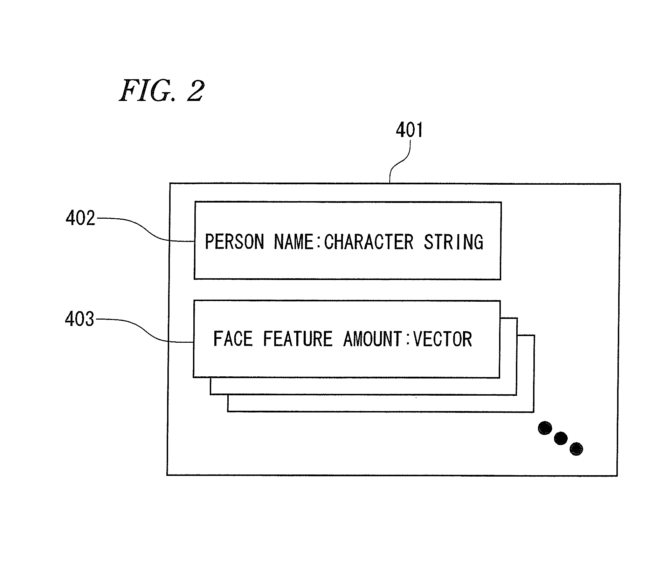

FIG. 2 is a view showing an element of the person and face database according to the embodiment.

Reference numeral 401 represents a person and face database element. The person and face database element 401 includes a later-described person name 402 and face feature amount 403 of the person associated with the person name.

According to this embodiment, the person and face database 109 is constructed from the person and face database element 401.

The face feature amount 403 is a feature amount extracted by performing image processing on a face. In this embodiment, it is vector data consisting of multiple elements, for example, as shown in Japanese Unexamined Patent Application No. 2009-88904. The person name is sometimes assigned to a group consisting of more than one person like a group name and a duo name, and it may be made possible to select more than one face feature amount 403 so that the face feature amount of each member of the group can be registered.

As described above, the person name 402 and the face feature amount 403 of the person associated with the person name are constructed and stored in the person and face database 109. A video scene where the person associated with the stored person name appears is detected from the video content by a recognition using the face feature amount, thereby detecting a person video scene. For future detection of the same person, the metadata storage 107 may generate metadata related to the person name and the position of the person video scene (video scene where the person appears) and store it in a state of being associated with the content.

When the metadata related to the person name and the position of the person video scene is already stored, the detection of the position of the person video scene may be omitted.

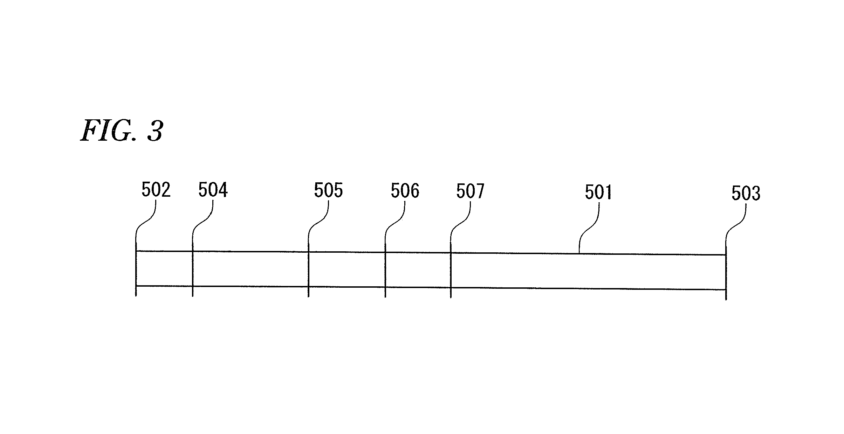

FIG. 3 is a view showing person video scenes extracted from a video content in the video display apparatus according to the embodiment.

Reference numeral 501 represents an example showing the person video scenes detected in the video content.

Reference numerals 502 and 503 represent the start and end of the content, respectively.

Reference numerals 504, 505, 506 and 507 represent the positions of a first, second, third and fourth person video scenes where the person appears, respectively.

In displaying a content on the video display apparatus, for example, it may be performed to circularly select some or all of the detected positions of the person video scenes and display stationary pictures or moving pictures such as thumbnails at the positions of the content.

It may also be performed to actually display the positions of the person video scenes in the content on a video display module (not shown) of the video display apparatus 101 by a structure as shown in FIG. 3 and display a stationary picture or a moving picture such as a thumbnail of the detected person image scene with respect to the position that the user selects by using a remote control or the like on thus displayed structure.

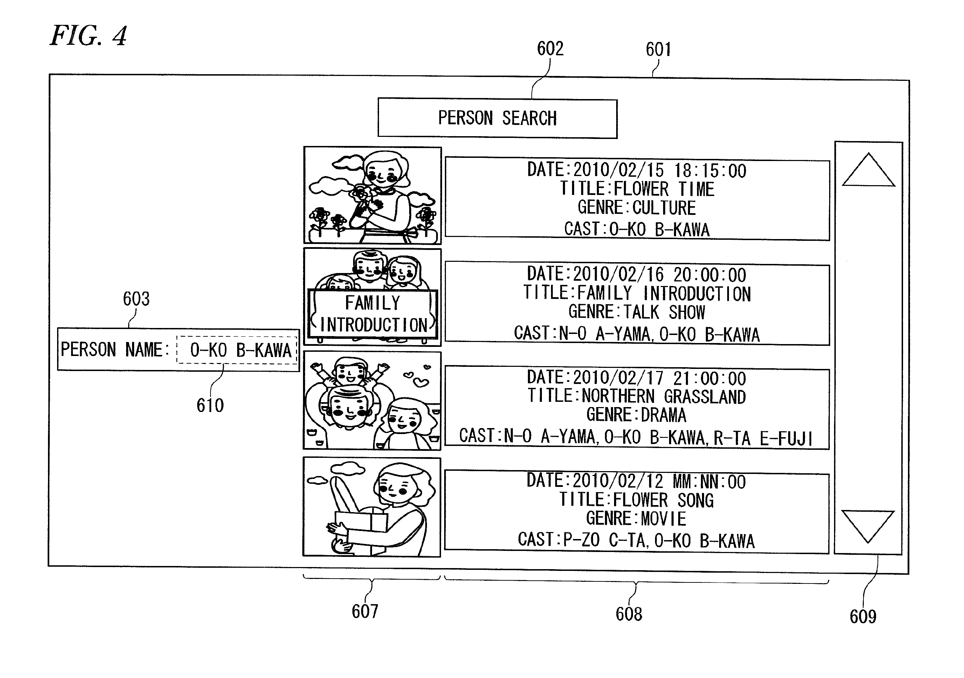

FIG. 4 is a view of a display of video scenes where the person associated with a person name appears in the video display apparatus according to the embodiment.

As described above, the person name 402 constructed and stored in the person and face database 109 and information on the person associated with the person name are used.

This is an example in which thumbnail images are displayed on the video display module based on person search.

Reference numeral 601 represents an example of a screen displayed on the video display module.

Reference numeral 602 represents an indication of person search. Reference numeral 603 indicates that the person name searched for in the person search is O-ko B-kawa as shown at reference numeral 610.

Reference numeral 607 represents multiple thumbnail images retrieved in the person search. Since video scenes where the person associated with the person name appears are retrieved as described above, O-ko B-kawa appears in all the images.

Reference numeral 608 represents a display of information related to the retrieved image such as the recording date, the title, the genre and the cast.

Reference numeral 609 represents an example of scroll bar. For example, the user can perform a scroll up or down operation by using a non-illustrated remote control or the like to display retrieved images which are not displayed.

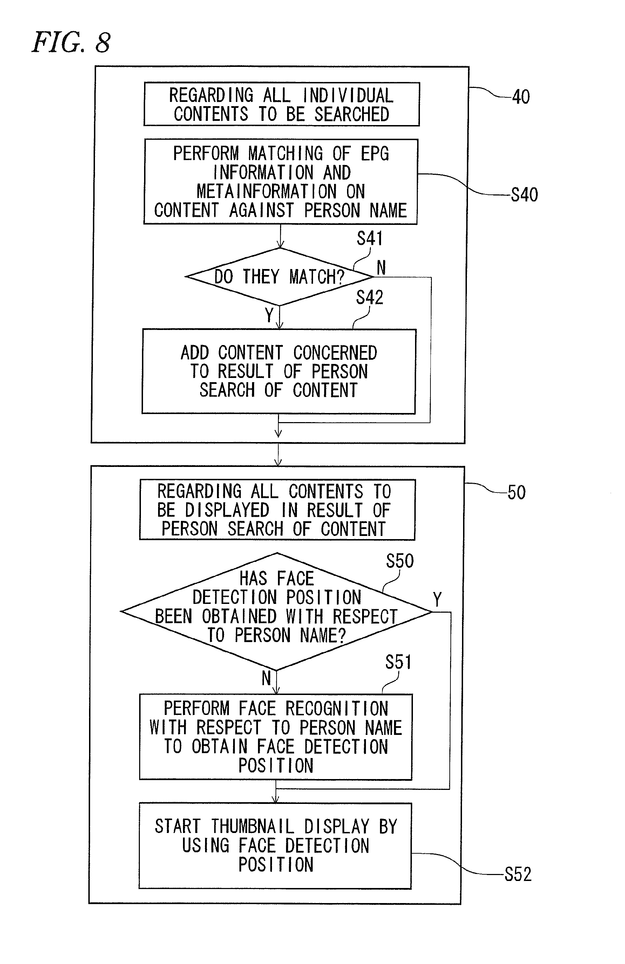

Now, the operation to provide the display shown in FIG. 4 will be described by using FIG. 8.

FIG. 8 is a flowchart for explaining the operation performed to display a video scene where the person associated with a person name appears in the video display apparatus according to the embodiment.

Reference numeral 40 represents an operation performed on all the individual contents to be searched in the video display apparatus. Reference numeral 50 represents an operation performed on all the contents to be displayed in the result of the person search of the content in the video display apparatus.

First, with respect to the operation of reference numeral 40, the operation on the individual contents to be searched will be described.

Reference numeral S40 represents a step of performing matching of the EPG information and metainformation on the content against the person name. Then, the process proceeds to the step denoted by reference numeral S41.

Reference numeral S41 represents a step of determining whether the EPG information and the metainformation match with the person name or not. When it is determined that the EPG information and the metainformation match with the person name, the process proceeds to the step denoted by reference S42 (Y). When it is not determined that the EPG information and the metainformation match with the person name, the processing related to the content is ended.

Reference numeral S42 represents a step of adding the content to the result of the person search of the content. By performing the above-described processing, for example, candidates of the content to be thumbnail-displayed shown in FIG. 4 are added. Then, the processing related to the content is ended.

After the operation of reference numeral 40 is performed on all the contents to be searched, the operation of reference numeral 50 is performed on all the contents in the result of the person search of the content.

Next, with respect to the operation of reference numeral 50, the operation on the individual contents in the result of the person search of the content will be described.

Reference numeral S50 represents a step of determining whether the face detection position has been obtained or not with respect to the person name. That is, it is determined whether or not the person video scene of the content with respect to the person has been already stored in the metadata storage. When it is determined that the face detection position has been obtained with respect to the person name, the process proceeds to the step denoted by reference numeral S52 (Y). When it is not determined that the face detection position has been obtained with respect to the person name, the process proceeds to the step denoted by reference numeral S51 (N).

Reference numeral S51 represents a step of performing face recognition with respect to the person name to obtain the face detection position. Then, the process proceeds to the step denoted by reference numeral S52.

Reference numeral S52 represents a step of starting thumbnail display by using the face detection position. Thereby, a thumbnail display as shown in FIG. 4 is provided with respect to the content. Then, the processing related to the content is ended.

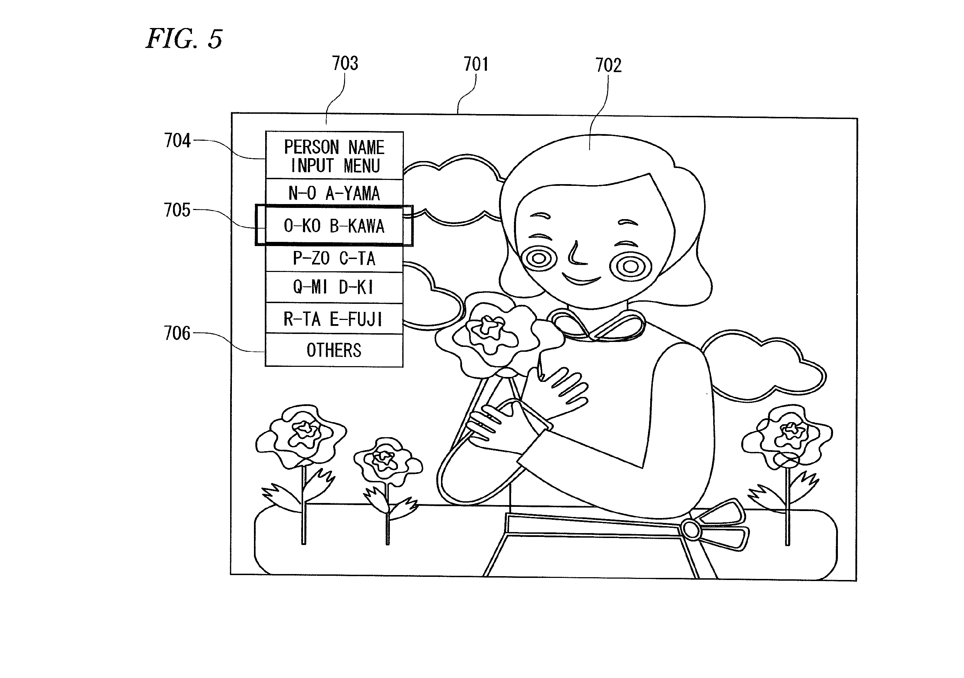

FIG. 5 is a view showing a method where the person to be extracted and the person name are registered while the person is displayed and the displayed person and the person name are stored in a state of being associated with each other in the video display apparatus according to the embodiment.

In the video display apparatus 101, the face feature amount of the displayed person and the person name are stored in a state of being associated with each other in order to extract scenes where the person appears from a video content and display them.

First, the recorded content is displayed on the video display module of the video display apparatus 101. In this embodiment, the person to be associated with a person name is displayed. Then, the person names used for the association with the displayed person are displayed in list form so as to be superimposed on the recorded content where the person to be associated with the person name is displayed,.

Then, the face feature amount extracted from the displayed person and the person name are associated with each other by a user operation as described below, and this information is stored, for example, in the person and face database 109.

Then, the video scenes where the person associated with the person name appears or video scenes adjacent to the video scenes where the person associated with the person name appears are detected from the video content by using the information stored in the person and face database 109 as described above. At this time, in this embodiment, detection using the face feature amount is performed as described above.

Reference numeral 701 represents an example of a display screen for storing a person and a person name in a state of being associated with each other to extract and display scenes where the person appears. This screen is displayed on the video display module of the video display apparatus 101.

Reference numeral 702 represents, in this example, the person to be stored in a state of being associated with a person name.

Reference numeral 703 represents a list of the person names used for the association with the displayed person. In this example, multiple candidates are displayed as the person names. This person name list is displayed so as to be superimposed on a side of the displayed person so that the displayed person can be recognized.

Reference numeral 704 indicates that this list is a person name input menu. As described above, multiple candidates are displayed as the person names, and in this example, N-o A-yama, 0-ko B-kawa, P-zo C-ta, Q-mi D-ki, R-ta E-fuji and others are displayed as the candidates.

Reference numeral 705 represents a highlighting module for highlighting the person name to be associated with the displayed person. In this example, it is indicated that O-ko B-kawa is selected. If registration is performed here by the user operation, the person to be stored 702 is associated as O-ko B-kawa, and stored in the person and face database 109.

The person name input menu 703 may be structured as a person name candidate icon or a direct input icon. For example, the person name candidate icon may be a list of the cast information included in the program information obtained from the EPG. At this time, the number of candidates may be made variable.

Moreover, it may be performed to allow the user to register a person not included in the program information and store it in the metadata storage 107, and use the information.

In this structure, a cursor is also used, and a user interface can be structured such that the cursor can be moved on the person candidate icon and the direct input icon 706 by a remote control operation or the like to make a selection.

As described above, when a person and a person name are registered, the feature amount extracted from the face feature amount extracting module 117 is registered in the person and face database 109 in the format of the person and face database element 401.

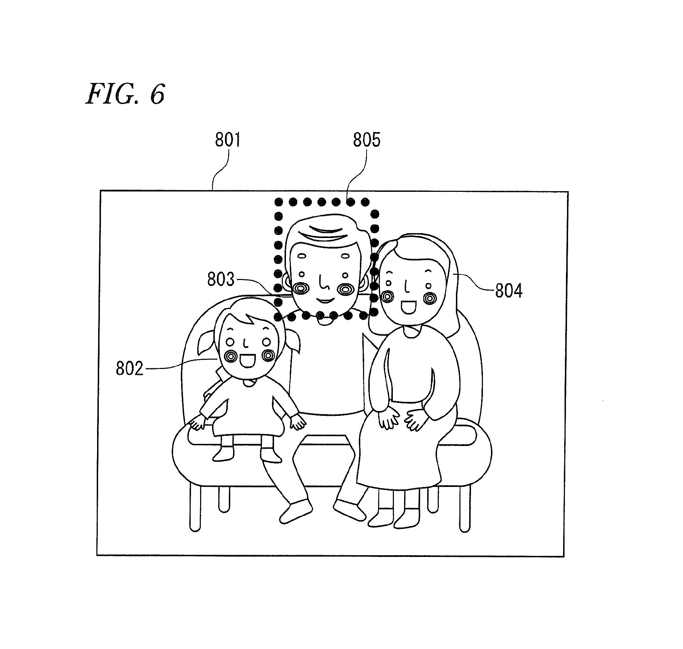

FIG. 6 is a view showing a method where when, for example, multiple persons are displayed as the persons to be extracted in the video display apparatus according to the embodiment, a highlighted person and a person name are registered and the highlighted person and the person name are stored in a state of being associated with each other.

In the figure, multiple persons are displayed on the display module of the video display apparatus 101.

Reference numeral 801 represents a video scene where multiple persons appear. In the figure, reference numerals 802, 803 and 804 represent the displayed persons.

Reference numeral 805 represents a person highlighting module for highlighting the person denoted by reference numeral 803 so as to be distinguishable from the other persons.

By thus highlighting part of the display screen, the user can select a specific person.

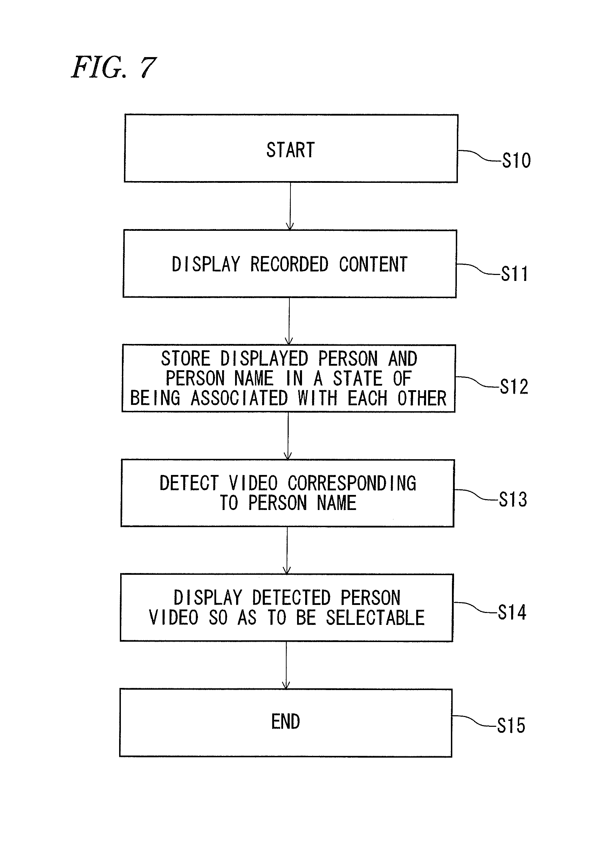

FIG. 7 is a flowchart for explaining the operation including data registration into the person and face database in the video display apparatus according to the embodiment.

Reference numeral S10 represents a start step of this operation. Then, the process proceeds to the step denoted by reference numeral S 11.

Reference numeral S11 represents a step of displaying a recorded content stored in the content storage 108 of the video display apparatus 101. Then, the process proceeds to the step denoted by reference numeral S 12.

Reference numeral S 12 represents a step in which the user registers a displayed person and a person name in a state of being associated with each other while viewing the recorded content and stores them into the person and face database 109. Then, the process proceeds to the step denoted by reference numeral S 13.

Reference numeral S 13 represents a step of detecting the video corresponding to the person name based on the information stored in the person and face database 109. Then, the process proceeds to the step denoted by reference numeral S 14.

Reference numeral S 14 represents a step of displaying the detected video corresponding to the person name so as to be selectable. The user can select a desired video scene, for example, from a display of a visualized person video scene as shown in FIG 3. Then, the process proceeds to the step denoted by reference S 15.

Reference numeral S 15 represents an end step where the processing in this operation is ended.

By the structure as described above, in this embodiment, the user can associate a person name and a displayed person with each other and register them while viewing an actual content. Thereby, the registration accuracy of the person and face database 109 can be improved. Moreover, an easy-to-understand user operation can be realized.

### (Second Embodiment)

In the description given above, for convenience of explanation, with respect to a video display apparatus having a recording function, a prerecorded video content is used as the video content for detecting video scenes. However, the present invention is not limited thereto.

That is, according to this embodiment, the following can be performed: When a thumbnail display or a content display of a search result is provided on a video distributing website or the like on the Internet, by using a person name or the like among the search keywords, the display positions of the thumbnails in the content are determined and the content display method is determined by using the detection of the video scenes where a person associated with the stored person name appears.

While certain embodiments have been described, these embodiments have been presented by way of example only, and are not intended to limit the scope of the invention. Indeed, the novel apparatus and method described herein may be embodied in a variety of other forms; furthermore, various omissions, substitutions and changes in the form of the apparatus and method described herein may be made without departing from the sprit of the invention. The accompanying claims and their equivalents are intended to cover such forms or modifications as would fall within the scope and sprit of the invention.

## Claims

1. A video display apparatus comprising:
a database comprising data of a name of a person and a feature amount on an image of the person;
a selecting module configured to select a name of a specific person;
a person video scene detecting module configured to detect a scene including the person of the selected name from a video content by using the database; and
a video list displaying module configured to display at least one image of moving picture or stationary picture indicating the detected scene in the video content in a list form.

2. The apparatus of claim 1 further comprising:
a video displaying module configured to display the video content;
a person associating module configured to associate a person displayed on the video displaying module and a person name with each other;
a module configured to extract a feature amount on an image of the displayed person; and
a database updating module configured to add data comprising the extracted feature amount on the image of the person and the person name, to the database.

3. The apparatus of claim 2 further comprising:
a person highlighting module configured to highlight a part of a screen of the video content for selection of the person.

4. The video display apparatus of claim 2 or 3, wherein the video displaying module is configured to display the person name in a list form for the association with the displayed person.

5. The apparatus of any one of claims 1 to 4, wherein the video content is prerecorded.

6. The apparatus of any one of claims 1 to 5, wherein the video list displaying module is configured to display the detected scene so as to be selectable.

7. The apparatus of any one of claims 1 to 6, wherein the feature amount is a feature amount of the person's face.

8. A video display method comprising:
selecting a name of a specific person;
detecting a scene including the person of the selected name from a video content by using a database comprising a name of a person and a feature amount on an image of the person; and
displaying at least one image of moving picture or stationary picture indicating the detected scene in the video content in a list form.

9. The method of claim 8, further comprising:
displaying the video content;
associating a person displayed and a person name with each other;
extracting an feature amount on an image of the displayed person; and
adding data comprising the extracted feature amount on the image of the person and the person name, to the database.

10. The method of claim 8 or 9, wherein the feature amount is a feature amount of the person's face.
